# EUROPEAN PATENT APPLICATION

(11) **EP 2 174 966 A1**
(43) Date of publication of application: **14.04.2010**
(21) Application number: 08791660.7
(22) Date of filing: 25.07.2008
(51) Int. Cl.: C08F 292/00, G02C 7/04

(54) **OPTICAL MATERIAL AND OPHTHALMIC LENS MADE OF THE SAME**

(30) Priority: 27.07.2007 JP 2007195297
(71) Applicant: Menicon Co., Ltd., Nagoya-shi Aichi 460-0006 (JP)
(72) Inventor: CHOPPINET, Patricia, Kasugai-shi Aichi 487-0032 (JP); NAKAJIMA, Tatsutoshi, Kasugai-shi Aichi 487-0032 (JP); YOKOYAMA, Yasuhiro, Kakamigahara-shi Gifu 509-0109 (JP); YAMAZAKI, Masanori, Yokohama-shi Kanagawa 227-8502 (JP); SETOYAMA, Tohru, Yokohama-shi Kanagawa 227-8502 (JP)
(74) Representative: Paget, Hugh Charles Edward
(86) International application number: PCT/JP2008/063416
(87) International publication number: WO 2009/017060

(57) **Abstract**

An optical material obtained by using metal oxide nanoparticles is provided which has a high refractive index while securing excellent transparency and oxygen permeability. Further, an ophthalmic lens such as a contact lens or an intraocular lens is provided by using the same. The optical material is obtained by polymerizing a monomer composition comprising at least one polymerizable unsaturated bond-containing monomer in which metal oxide nanoparticles, which have previously been modified by silane coupling agents, are uniformly dispersed, while maintaining a stable dispersion of the metal oxide nanoparticles.

## Description

### TECHNICAL FIELD

The present invention relates to an optical material and an ophthalmic lens made of the same, particularly to an optical material with a high refractive index, which is obtained by dispersing and containing metal oxide nanoparticles, and an ophthalmic lens such as a contact lens or an intraocular lens formed by using the same.

### BACKGROUND ART

Metal oxides have been conventionally used in various applications. In the field of lens material, for example, titanium dioxide is used as a coloring agent for producing a colored contact lens as disclosed in patent document 1. Described more specifically, patent document 1 discloses a method of producing a colored contact lens by dispersing titanium dioxide as a coloring agent in a suitable carrier, applying the obtained dispersed product or dispersion to a desired portion of a mold so as to imprint thereon a suitable pattern corresponding to an iris section of an intended lens, and polymerizing a monomer liquid introduced into the mold. The contact lens obtained according to the disclosed method has a colored iris section corresponding to the pattern imprinted on the above-indicated portion of the mold. Patent document 2 and patent document 3 also disclose a method for producing a colored contact lens by coating an ink including a coloring agent such as iron oxide, chromium oxide or titanium oxide, to the iris portion of the contact lens surface and then curing the ink to form a colored layer over the iris section above indicated. All of the techniques disclosed in the above-indicated patent documents are intended to form the colored iris section in the contact lens, in other words, the obtained lens is used as an artificial eye or ocular prosthesis, wherein the colored iris section is opaque due to a coloring component.

Under such a circumstance, the applicant of the present invention has previously found that a water-absorptive gel having a high degree of transparency sufficient for an optical use and capable of maintaining a desired shape can be obtained by allowing a predetermined cross-linked water-absorptive polymer to swell in an aqueous medium in which metal oxide nanoparticles are uniformly dispersed, and further that an ophthalmic material having excellent ultraviolet absorption properties can be obtained from such a water-absorptive gel. The applicant of the present invention has applied for a patent for the above findings (patent document 4).

Then, it has been attempted to allow such metal oxide nanoparticles to be dispersed and contained, not in an aqueous medium mainly composed of water as described above, but in a polymerizable unsaturated bond-containing monomer, which is a nonaqueous solution, in order to obtain an optical material excellent in transparency. However, although the metal oxide nanoparticles are dispersible in the aqueous medium, they sediment and precipitate due to specific gravity of the metal oxide itself in the nonaqueous solution such as the monomer which gives the optical material, even when sufficiently stirred and mixed. They cannot therefore be uniformly dispersed, resulting in failure to obtain a transparent polymer.

Meanwhile, various optical materials having characteristics such as hydrophobic properties and hydrophilic properties have been used to make a contact lens and an intraocular lens, which is implanted in a patient's eye from which a crystalline lens has been removed in a cataract surgery for rectifying the wearer's eyesight. Such optical materials are required to have a high refractive index. The thickness of the lens can be reduced with a corresponding increase in its refractive index. As a result, the contact lens can have the improved oxygen permeability, and the intraocular lenses, particularly the foldable intraocular lenses, can be folded more easily.

In an attempt to obtain an ophthalmic device with a high refractive index, patent document 5 proposes the use of a silicone macromonomer in which an aromatic substituent group is introduced into a side chain thereof. However, it has a room for further improvement.

Patent Document 1: JP-A-3-54519
Patent Document 2: JP-A-6-347728
Patent Document 3: JP-A-8-152582
Patent Document 4: JP-A-2000-327925
Patent Document 5: U.S. Patent No. 6989430

### DISCLOSURE OF THE INVENTION

### PROBLEMS TO BE SOLVED BY THE INVENTION

The present inventors have made herein various studies on dispersing the above-mentioned metal oxide nanoparticles in the polymerizable unsaturated bond-containing monomer, which is the nonaqueous solution. As a result, it has been found that affinity of the metal oxide nanoparticles with the monomer is improved by treating the metal oxide nanoparticles with silane coupling agents, whereby the metal oxide nanoparticles are dispersed finely and uniformly in the monomer and the stable dispersion is maintained. Further, it has also been found that an optical material having a high refractive index and a high degree of transparency sufficient for an optical use can be obtained by polymerizing a monomer composition in which such metal oxide nanoparticles are uniformly dispersed. Thus the present invention has been completed.

It is therefore an object of the present invention to provide an optical material having a high refractive index and a high degree of transparency sufficient for an optical use by using metal oxide nanoparticles. Further, another object of the present invention is to provide an ophthalmic lens such as a contact lens or an intraocular lens excellent in transparency and having a high refractive index by using such an optical material.

### MEANS FOR SOLVING THE PROBLEMS

The first object described above may be obtained according to a principle of the invention which provides an optical material comprising a polymer obtained by polymerizing a monomer composition comprising at least one polymerizable unsaturated bond-containing monomer in which metal oxide nanoparticles which are surface-modified with silane coupling agents are uniformly dispersed, while maintaining a stable dispersion of the metal oxide nanoparticles.

According to one of preferred forms of the optical material of the present invention, (meth)acryloyl groups or styryl groups, which are polymerizable groups, are introduced onto surfaces of the metal oxide nanoparticles by the surface modification.

According to one of desirable forms of the optical material of the present invention, the metal oxide nanoparticles dispersed in the polymer have an average particle size of 25 nm or less.

According to another one of preferred forms of the optical material of the present invention, the metal oxide is at least one selected from the group consisting of titanium oxide, zirconium oxide and hafnium oxide.

According to still another one of preferred forms of the optical material of the present invention, the metal oxide nanoparticles, which are surface-modified with the silane coupling agents, are contained in the monomer composition at a ratio of 0.1 to 80% by weight.

According to a further one of desirable forms of the optical material of the present invention, the metal oxide nanoparticles, which are surface-modified with the silane coupling agents, act as a crosslinking agent, whereby the polymer is crosslinked through the metal oxide nanoparticles.

According to a still further one of preferred forms of the optical material of the present invention, the monomer contain one of (meth)acryloyl group and styryl group.

Moreover, the another object of the present invention may be attained according to another principle of the present invention, which provides an ophthalmic lens such as a contact lens or an intraocular lens formed of the optical material described above.

### ADVANTAGEOUS EFFECT OF THE INVENTION

As described above, in the optical material according to the present invention, the metal oxide nanoparticles whose surface have been modified with the silane coupling agents are contained in the polymerizable unsaturated bond-containing monomer(s) which gives the polymer. Accordingly, affinity (compatibility) of the metal oxide nanoparticles with the monomer(s), which is a nonaqueous solution, is improved, whereby the metal oxide nanoparticles are uniformly dispersed in the monomer(s), and a stable dispersion thereof is advantageously maintained. For this reason, the monomer composition in which the metal oxide nanoparticles are contained can be polymerized while maintaining the stable dispersion of the metal oxide nanoparticles, whereby the metal oxide nanoparticles are uniformly dispersed and contained also in the polymer after polymerization.

As a result, in the optical material according to the present invention, the polymer excellent in transparency and having favorable optical performance is obtained, although the metal oxide nanoparticles are contained. Further, the refractive index is advantageously increased by allowing the metal oxide nanoparticles to be uniformly dispersed and contained in the polymer. For this reason, the optical material according to the present invention is extremely advantageous as a material for an ophthalmic lens such as a contact lens or an intraocular lens.

Further, the thickness of the ophthalmic lens formed of such an optical material can be reduced because it is formed of the extremely advantageous optical material with a high refractive index. Accordingly, for example, when the contact lens is formed as the ophthalmic lens, oxygen permeability of the contact lens is improved with a corresponding decrease in its thickness. Further, when the intraocular lens, particularly a foldable intraocular lens is formed as the ophthalmic lens, the intraocular lens can be folded more easily due to the decrease in its thickness.

### BEST MODE FOR CARRYING OUT THE INVENTION

Such an optical material according to the present invention is advantageously produced by polymerizing a monomer composition comprising at least one kind of polymerizable unsaturated bond-containing monomers in which metal oxide nanoparticles which are surface-modified with silane coupling agents are uniformly dispersed, by various techniques which have hitherto been known.

As the metal oxide to be contained in such an optical material according to the present invention in a stably dispersed state, any metal oxide may be appropriately employed as long as it is in a fine particle form. However, when the average particle size thereof is too large, optical scattering may be occurred, which results in failure to secure transparency. Accordingly, in the present invention, the metal oxide having an average particle size of 25 nm or less can be advantageously used in a polymer, which gives the optical material, in order to secure transparency sufficient for the optical material, particularly for a raw material (a material) for ophthalmic lens or the like. Preferably, the metal oxide having an average particle size of 15 nm or less is used in order to obtain further transparency. The average particle size of the metal oxide in the polymer can be measured by XRD (X-ray diffraction) or a TEM (transmission electron microscope) in the present invention.

Examples of such metal oxides include various known metal oxides. Particularly, in the present invention, there are advantageously used titanium oxide, zirconium oxide and hafnium oxide, which have a higher refractive index among the metal oxides. Any one of, or any combination of these metal oxides may be used. The refractive indexes of such metal oxides themselves are as follows, respectively: titanium oxide; 2.52 to 2.71 (varies depending on its crystal structure), zirconium oxide; 2.1 to 2.4 (varies depending on its crystal structure) and hafnium oxide; 2.5.

Then, the above-described metal oxide nanoparticles settle out due to specific gravity of the metal oxide itself and finally precipitate, even when they are stirred and mixed in the monomer(s), which is a nonaqueous solution. Accordingly, in the present invention, nanoparticles of a metal oxide which are surface-modified with the silane coupling agents, which will be described later, are used.

As a technique for surface-modifying the metal oxide nanoparticles with the silane coupling agents herein, any one of various techniques which have hitherto been known may be employed. In the present invention, in order to enhance a reaction of the silane coupling agents to surfaces of the metal oxide nanoparticles, a treatment in a liquid phase (wet process) can be employed in which the metal oxide nanoparticles are uniformly dispersed in a predetermined solvent and the silane coupling agents are added thereto.

As the silane coupling agents used for surface treatment (surface modification) of the metal oxide nanoparticles, any known one which has hitherto been used as a silane coupling agents can be used. Examples of the silane coupling agents preferably used in the present invention include: a (meth)acryloyl group-containing (meth)acryloxy silane coupling agents such as 3-(meth)acryloxypropyltriethoxysilane, 3-(meth)acryloxypropyltrimethoxysilane, 3-(meth)acryloxypropylmethyldiethoxysilane, 3-(meth)acryloxypropylmethyldimethoxysilane, 3-(meth)acryloxypropyldimethylethoxysilane and 3-(meth)acryloxypropyldimethylmethoxysilane; and a styryl group-containing styryl silane coupling agents such as p-styryltriethoxysilane, p-styryltrimethoxysilane, p-styrylmethyldiethoxysilane, p-styrylmethyldimethoxysilane, p-styryldimethylethoxysilane and p-styryldimethylmethoxysilane. Any one of, or any combination of these silane coupling agents may be used. By using such a (meth)acryloyl group-containing (meth)acryloxy silane coupling agent or a styryl group-containing styryl silane coupling agent, (meth)acryloyl groups or styryl groups, which are polymerizable groups, are introduced onto the surfaces of the metal oxide nanoparticles, thereby improving the affinity of the metal oxide nanoparticles and the monomer(s) which will be described later, and allowing the metal oxide nanoparticles to be present in a state where they are bonded to a polymer chain constituting the optical material. That is to say, onto the surfaces of the metal oxide nanoparticles which are surface-modified with the silane coupling agents, a number of the polymerizable groups are introduced. Accordingly, a part or all of the metal oxide nanoparticles act or function like a crosslinking agent, whereby the polymer which gives the optical material is crosslinked through the metal oxide nanoparticles, resulting in advantageously improving the hardness and strength of the optical material. In particular, when the compounding ratio of a silicon-containing monomer to all polymerizable components (all monomer components) is increased for the purpose of improving oxygen permeability of the optical material, generally the hardness and strength of the obtained polymer is apt to decrease, but the use of the metal oxide nanoparticles, which are treated with the above-described silane coupling agents, results in advantageously improving the hardness and strength of the polymer.

In this specification, "... (meth)acryloxy" is generic to the following two compounds: "... acryloxy" and "... methacryloxy". Similarly, it is to be understood that other (meth)acrylic compounds are generic to two compounds.

In the surface treatment (silane coupling treatment) with the above-mentioned silane coupling agents, it is desirable to treat the metal oxide nanoparticles with a predetermined organic acid prior to the silane coupling treatment and/or concurrently with the silane coupling treatment. The surfaces of the metal oxide nanoparticles are modified by this organic acid treatment, and the above-mentioned silane coupling agents are bonded to the surfaces of the metal oxide nanoparticles more effectively. Here, the above-mentioned organic acid is not particularly limited, as long as it has reactivity to the metal oxide. Examples thereof include caprylic acid, myristic acid, palmitic acid, stearic acid, behenic acid, oleic acid and the like. At least one of them is appropriately selected and used. Further, as the treating method with the organic acid, a known technique can be appropriately employed. Generally, a method may be employed in which the organic acid is added dropwise to a liquid in which the metal oxide nanoparticles are dispersed in a predetermined solvent, and the solvent is stirred and mixed for a predetermined period of time.

In this way, functional groups corresponding to the silane coupling agents used can be introduced onto the surfaces of the metal oxide nanoparticles. Although reactivity of the above-mentioned silane coupling agents to the surfaces of the metal oxide nanoparticles tends to be low, when the degree of surface modification is too low, in other words, when the amount of the surface modifying agent which modifies the surfaces of the metal oxide nanoparticles is too small, the affinity with the monomer(s) described later cannot be sufficiently improved. As a result, the transparent optical material and the improvement of the surface hardness may not be obtained because dispersibility in the monomer(s) is poor. It is therefore desirable to perform the surface treatment until the net metal oxide amount in the metal oxide which was surface-modified with the silane coupling agents become 90% by weight or less. Due to the use of the metal oxide nanoparticles, the stable dispersion can be secured well, and the optical material excellent in transparency can be obtained.

The metal oxide nanoparticles which were surface-modified with the silane coupling agents are uniformly dispersed and contained in the polymer composition in a ratio of preferably 0.1 to 80% by weight, more preferably 1 to 60% by weight, still more preferably 10 to 40% by weight, depending on the degree of surface modification thereof, etc. This is because when the content ratio of the metal oxide surface-treated with the silane coupling agents is too low, the improvement of the refractive index due to such a metal oxide cannot be sufficiently obtained, whereas when the content thereof is too high, it becomes difficult to secure transparency of the optical material.

In order to allow such metal oxide nanoparticles which are surface-modified with the silane coupling agents to be dispersed and contained in the liquid comprising the monomer(s) which give(s) the polymer, any one of various known techniques may be employed. For example, supersonic waves may be used to finely and uniformly disperse the nanoparticles in the monomer liquid. The stability of the metal oxide nanoparticles dispersion is excellent, so the stable dispersion can be maintained.

The monomer which gives the polymer to be the optical material according to the present invention is not particularly limited, as long as it is a polymerizable unsaturated bond-containing monomer. Any one of, or any combination of various known monomers for forming polymers which give optical materials such as ophthalmic lens materials may be appropriately selected and used. In particular, of the optical materials, for a material for an ophthalmic lens such as a contact lens or an intraocular lens, a (meth)acryloyl group-containing (meth)acrylate-based monomer or a styryl group-containing styrenic monomer, for example, is advantageously used as the monomer.

Specifically, examples of the (meth)acrylate-based monomers which give such an optical material include alkyl (meth)acrylates such as methyl (meth)acrylate, ethyl (meth)acrylate, propyl (meth)acrylate, n-butyl (meth)acrylate, tert-butyl (meth)acrylate, isobutyl (meth)acrylate, n-pentyl (meth)acrylate, tert-pentyl (meth)acrylate, hexyl (meth)acrylate, 2-methylbutyl (meth)acrylate, heptyl (meth)acrylate, octyl (meth)acrylate, 2-ethylhexyl (meth)acrylate, nonyl (meth)acrylate, decyl (meth)acrylate, dodecyl (meth)acrylate, stearyl (meth)acrylate, cyclopentyl (meth)acrylate and cyclohexyl (meth)acrylate; silicon-containing (meth)acrylates such as pentamethyldisiloxanylmethyl (meth)acrylate, pentamethyldisiloxanylpropyl (meth)acrylate, methylbis(trimethylsiloxy)silylpropyl (meth)acrylate, tris(trimethylsiloxy)silylpropyl (meth)acrylate, mono[methylbis(trimethylsiloxy)siloxy]bis(trimethylsiloxy)silylpropyl (meth)acrylate], methylbis(trimethylsiloxy)silylpropylglycerol (meth)acrylate, tris(trimethylsiloxy)silylpropylglycerol (meth)acrylate, mono[methylbis(trimethylsiloxy)siloxy]bis(trimethylsiloxy)silylpropylglycerol (meth)acrylate, trimethylsilylethyltetramethyldisiloxanylpropylglycerol (meth)acrylate, trimethylsilylmethyl (meth)acrylate, trimethylsilylpropyl (meth)acrylate, trimethylsilylpropylglycerol (meth)acrylate, pentamethyldisiloxanylpropylglycerol (meth)acrylate, methylbis(trimethylsiloxy)silylethyltetramethyldisiloxanylmethyl (meth)acrylate, tetramethyltriisopropylcyclotetrasiloxanylpropyl (meth)acrylate, and tetramethyltriisopropylcyclotetrasiloxybis(trimethylsiloxy)silylpropyl (meth)acrylate; fluorine-containing alkyl (meth)acrylates such as 2,2,2-trifluoroethyl (meth)acrylate, 2,2,3,3-tetrafluoropropyl (meth)acrylate, 2,2,3,3,3-pentafluoropropyl (meth)acrylate, 2,2,2-trifluoro-1-trifluoromethylethyl (meth)acrylate, 2,2,3,3-tetrafluoro-tert-pentyl (meth)acrylate, 2,2,3,4,4,4-hexafluorobutyl (meth)acrylate, 2,2,3,3,4,4-hexafluorobutyl (meth)acrylate, 2,2,3,4,4,4-hexafluoro-tert-hexyl (meth)acrylate, 2,2,3,3,4,4,4-heptafluorobutyl (meth)acrylate, 2,2,3,3,4,4,5,5-octafluoropentyl (meth)acrylate, 3,3,4,4,5,5,6,6-octafluorohexyl (meth)acrylate, 2,3,4,5,5,5-hexafluoro-2,4-bis(trifluoromethyl)pentyl (meth)acrylate, 2,2,3,3,4,4,5,5,5-nonafluoropentyl (meth)acrylate, 2,2,3,3,4,4,5,5,6,6,7,7-dodecafluoroheptyl (meth)acrylate, 3,3,4,4,5,5,6,6,7,7,8, 8-dodecafluorooctyl (meth)acrylate, 3,3,4,4,5,5,6,6,7,7,8,8,8-tridecafluorooctyl (meth)acrylate, 2,2,3,3,4,4,5,5,6,6,7,7,7-tridecafluoroheptyl (meth)acrylate, 3,3,4,4,5,5,6,6,7,7,8,8,9,9,10,10-hexadecafluorodecyl (meth)acrylate, 3,3,4,4,5, 5,6,6,7,7,8,8,9,9,10,10,10-heptadecafluorodecyl (meth)acrylate, 3,3,4,4,5,5,6,6,7,7,8,8,9,9,10,10,11,11-octadecafluoroundecyl (meth)acrylate, 3,3,4,4,5,5,6,6,7,7,8,8,9,9,10,10,11,11,11-nonadecafluoroundecyl (meth)acrylate, 3,3,4,4,5,5,6,6,7,7,8,8,9,9,10,10,11,11,12,12-eicosafluorododecyl (meth)acrylate, 2-hydroxy-4,4,5,5,6,7,7,7-octafluoro-6-trifluoromethylheptyl (meth)acrylate, 2-hydroxy-4,4,5,5,6,6,7,7,8,9,9,9-dodecafluoro-8-trifluoromethylnonyl (meth)acrylate, and 2-hydroxy-4,4,5,5,6,6,7,7,8,8,9,9,10,11,11,11-hexadecafluoro-10-trifluoromethylundecyl (meth)acrylate; and the like. Any one of, or any combination thereof may be used. It is to be understood that any other known (meth)acrylate-based monomers may be used other than the exemplified ones.

Examples of the styrenic monomers include, styrene; styrene derivatives such as o-methylstyrene, m-methylstyrene, p-methylstyrene, p-ethylstyrene, o-hydroxystyrene, m-hydroxystyrene, p-hydroxystyrene, trimethylstyrene, tert-butylstyrene, perbromostyrene, dimethylaminostyrene and α-methylstyrene; silicon-containing styrene-derivatives such as tris(trimethylsiloxy)silylstyrene, trimethylsilylstyrene, pentamethyldisiloxanylstyrene, heptamethyltrisiloxanylstyrene, nonamethyltetrasiloxanylstyrene, pentadecamethylheptasiloxanylstyrene, heneicosamethyldecasiloxanylstyrene, heptacosamethyltridecasiloxanylstyrene, hentriacontamethylpentadecasiloxanylstyrene, bis(trimethylsiloxy)methylsilylstyrene, trimethylsiloxy(pentamethyldisiloxy)methylsilylstyrene, tris(pentamethyldisiloxy)silylstyrene, (tris(trimethylsiloxy)siloxanyl)bis(trimethylsiloxy)silylstyrene, bis(heptamethyltrisiloxy)methylsilylstyrene, tris(methylbis(trimethylsiloxy)siloxy)silylstyrene, trimethylsiloxy(bis(tris(trimethylsiloxy)siloxy)silylstyrene, heptakis(trimethylsiloxy)trisiloxanylstyrene, nonamethyltetrasiloxy(undecamethylpentasiloxy)methylsilylstyrene, tris(tris(trimethylsiloxy)siloxy)silylstyrene, (tris(trimethylsiloxy)hexamethyltetrasiloxy)(tris(trimethylsiloxy)siloxy) trimethylsiloxysilylstyrene, nonakis(trimethylsiloxy)tetrasiloxanylstyrene and bis(tridecamethylhexasiloxy)methylsilylstyrene; fluorine-containing styrene derivatives such as 4-vinylbenzyl-2',2',2'-trifluoroethyl ether, 4-vinylbenzyl-2',2',3',3',4',4',4'-heptafluorobutyl ether, 4-vinylbenzyl-3',3',3'-trifluoropropyl ether, 4-vinylbenzyl-3',3',4',4',5',5',6',6',6'-nonafluorohexyl ether, 4-vinylbenzyl-4',4',5',5',6',6',7',7',8',8',8'-undecafluorooctyl ether, o-fluorostyrene, m-fluorostyrene, p-fluorostyrene, trifluorostyrene, perfluorostyrene, p-trifluoromethylstyrene, o-trifluoromethylstyrene and m-trifluoromethylstyrene; and the like. Any one of, or any combination of the above styrenic monomers may be used. It is to be understood that any known styrenic monomers can be used other than the exemplified ones.

Of the monomers described above, one which gives a material with a high refractive index by polymerization can be more suitably employed from the viewpoint of an increase in refractive index. Specifically, one comprising the styrenic monomer as a main component, which gives a material with a higher refractive index than the (meth)acrylate-based monomer, can be advantageously employed.

Furthermore, when hydrophilic properties are imparted to such optical materials, hydrophilic monomers are also advantageously used besides the above-mentioned hydrophobic monomers. Examples of the hydrophilic monomers include: hydroxyl group-containing (meth)acrylates such as hydroxyethyl (meth)acrylate, hydroxypropyl (meth)acrylate, hydroxybutyl (meth)acrylate, dihydroxypropyl (meth)acrylate, dihydroxybutyl (meth)acrylate, diethylene glycol mono (meth)acrylate, triethylene glycol mono(meth)acrylate, propylene glycol mono (meth)acrylate and dipropylene glycol mono(meth)acrylate; (meth)acrylic acid; (meth)acrylamide or derivatives thereof (N-substituted) such as (meth)acrylamide, N-methyl (meth)acrylamide, N-ethyl (meth)acrylamide, N,N-dimethyl (meth)acrylamide, N,N-diethyl (meth)acrylamide and N,N-methylethyl (meth)acrylamide; vinyl lactams such as N-vinylpyrrolidone, N-vinylpiperidone, N-vinylcaprolactam and N-vinylcapryllactam; aminoalkyl (meth)acrylates such as aminoethyl (meth)acrylate, N-methylaminoethyl (meth)acrylate, N,N-dimethylaminoetyl (meth)acrylate and 2-butylaminoethyl (meth)acrylate; alkoxyl group-containing (meth)acrylates such as methoxyethyl (meth)acrylate, ethoxyethyl (meth)acrylate, methoxydiethylene glycol (meth)acrylate; maleic anhydride; maleic acid; fumaric acid; fumaric acid derivatives; and the like. These can be used either alone or in combination of two or more thereof.

In the present invention, it is also possible to further use a crosslinking agent which is a kind of polymerizable unsaturated bond-containing monomer. Any one of various known crosslinking agents each having two polymerizable bonds, which have hitherto been used as lens materials may be used. Examples of the crosslinking agents include (meth)acrylates of polyhydric alcohols such as ethylene glycol, diethylene glycol, triethylene glycol, propylene glycol, 1,4-butanediol, 1,6-hexanediol, trimethylolpropane and pentaerythritol; divinyl adipate, diallyl adipate, allyl vinyl adipate, divinyl sebacate, diallyl sebacate, allyl vinyl sebacate and vinyl esters or allyl esters of other polybasic carboxylic acids (ones in which all carboxyl groups of the polybasic carboxylic acids are esterified (completely esterified) are desirable in terms of solubility) such as oxalic acid, malonic acid, maleic acid, methylmalonic acid, succinic acid, dimethylmalonic acid, ethylmalonic acid, methylsuccinic acid, glutaric acid, dimethylsuccinic acid, isopropylmalonic acid, methylglutaric acid, methyladipic acid, pimelic acid, suberic acid, di-n-propylmalonic acid, 1,9-nonanedicarboxylic acid, 1,10-decanedicarboxylic acid, 1,3-phenylenediacetic acid, phenylsuccinic acid, benzylmalonic acid, 1,2,3-propanetricarboxylic acid, 1,3,5-pentanetricarboxylic acid and 1,2,3,4-butanetetracarboxylic acid; divinylbenzene; allyl (meth)acrylate, vinyl (meth)acrylate, 4-vinylbenzyl (meth)acrylate and 3-vinylbenzyl (meth)acrylate; triallyl cyanurate; triallyl isocyanurate; diethylene glycol bis(allyl carbonate); triallyl trimellitate; allyl ether; diallyl ether of alkylene glycol or polyalkylene glycol; divinyl ether of alkylene glycol or polyalkylene glycol; allyl ether vinyl ether of alkylene glycol or polyalkylene glycol; diallylidene pentaerythrite; 1,3,5-trivinyl-1,3,5-trimethylcyclotrisiloxane; and the like. Any one of, or any combination of these known crosslinking agents may be suitably selected and used.

The above-mentioned crosslinking agent is used for crosslinking the polymer, which is formed by polymerization of the monomer(s) described above, and allowed to be present at the time of polymerization of such monomer(s). Generally, the crosslinking agent is added at a ratio of 0.0005 to 10 parts by weight based on 100 parts by weight of the total amount of the above-described monomer(s). If the compounding ratio of the crosslinking agent is less than the above-mentioned range when the crosslinking agent is necessary, shape retention capability and moderate elasticity may not be obtained because a sufficient effect due to the crosslinking agent is not obtained. On the other hand, if the compounding ratio is more than the above-mentioned range, the optical material may become brittle and be easily broken because the number of crosslinking points excessively increases.

In addition, various other compounding agents or additives which have hitherto been generally used for the optical materials such as the ophthalmic lens materials can be further added to the above-described polymerizable unsaturated bond-containing monomer(s), in the conventional manner as needed. Examples thereof include a polymerizable ultraviolet absorptive monomer or coloring agent, an ultraviolet absorptive coloring agent or the like for imparting ultraviolet absorptivity to the optical material or coloring the optical material. As a result, it is also possible to introduce each of these additives into the polymer as one constituent of the optical material. However, it is to be understood that these compounding agents or additives are ones which do not impair the objects of the present invention, and further used within the quantitative range not impairing the objects.

As described above, the metal oxide nanoparticles surface-treated with the above-mentioned silane coupling agents are added into the monomer liquid comprising at least one kind of the above-described polymerizable unsaturated bond-containing monomers, and are uniformly dispersed, thereby preparing the polymerizable monomer composition. In producing the optical material by using this monomer composition, conventionally known various polymerization techniques may be employed. For example, polymerization may be performed by conventional methods after a polymerization initiator is further incorporated into the monomer composition.

Specifically, polymerization techniques of the monomer composition include, for example, a heat polymerization method in which the monomer composition is heated gradually or stepwise within the range of room temperature to about 130°C after adding the polymerization initiator to polymerize the monomer composition, and a photopolymerization method in which the monomer composition is irradiated by an appropriate light ray (for example, an ultraviolet ray) after adding a sensitizer to polymerize the monomer composition. Those heat polymerization method and photopolymerization method may be combined to polymerize the monomer composition. Further, polymerization types include, but are not limited to, a bulk polymerization process. It is to be understood that other various known techniques may be employed.

Generally, in the case of the heat polymerization, the polymerization initiator is used, whereas in the case of photopolymerization by irradiation of light such as an ultraviolet ray, the sensitizer is used. However, it is also possible to perform polymerization by light and/or heat using either one of the sensitizer and the polymerization initiator or both thereof in combination.

Here, examples of the polymerization initiators include conventional polymerization initiators such as azobisisobutyronitrile, azobisdimethylvaleronitrile, t-butyl hydroperoxide, and benzoyl peroxide. Further, examples of the sensitizers include conventional sensitizers such as diethoxyacetophenone, 4-(2-hydroxyethoxy)phenyl-(2-hydroxy-2-propyl)ketone, 2-hydroxy-2-methyl-1-phenylpropyl-1-one, 2-methyl-2-morpholino(4-thiomethylphenyl)propyl-1-one, 1-hydroxycyclohexyl-phenylketone, 2-benzyl-2-dimethylamino-4-morpholinophenyl-butanone, and benzyldimethylketal.

Further, any one of, or any combination of these polymerization initiators and sensitizers may be selected and used in a ratio ranging from 0.001 to 5 parts by weight, preferably from 0.002 to 3 parts by weight, based on 100 parts by weight of all polymerizable components. When the ratio is less than 0.001 part by weight based on 100 parts by weight of all polymerizable components, the polymer cannot be solidified because the amount of residual monomers become too much. On the other hand, when the ratio is more than 5 parts by weight based on 100 parts by weight of all polymerizable components, strength necessary for the optical material, particularly for the ophthalmic lens may not be secured, or the optical material may be yellowed because the average molecular weight after polymerization does not increase.

A method (processing method) for forming the optical material is not particularly limited. Any one of various techniques that have hitherto been known to those skilled in the art may be employed. For example, the optical material is formed by a cutting method in which a monomer composition is contained in a suitable mold and the monomer composition is polymerized therein so as to provide a bar-shaped, block-shaped, or plate-shaped material (lens blank), and then the obtained polymer is processed into a desired configuration by a mechanical processing such as cutting or grinding. For further example, the optical material is formed by a molding method in which a predetermined monomer composition is introduced into a mold cavity of the mold whose profile follows that of a desired ophthalmic article such as a contact lens or an intraocular lens, and then the above described polymer component is polymerized in the mold to obtain a molded article. Further, as needed, a combination of the molding method and the cutting method may be employed in which mechanical finishing processing is performed. Of the above-mentioned methods, the molding method is favorably employed, because production cost can be effectively reduced.

Further, the polymer formed as described above has hydrophobic properties or hydrophilic properties, depending on the kind of monomer used. When the optical material is hydrous, it is further immersed in water to be subjected to hydration treatment after shape forming, thereby obtaining the hydrous optical material having a predetermined water content. Furthermore, when the ophthalmic lens such as the contact lens or the intraocular lens is produced from such an optical material, it is to be understood that sterilization treatment or the like is appropriately performed as needed so as to secure sufficient safety to living organisms.

Further, in the optical material according to the present invention, it is also effective to impart more excellent water wettability by hydrophilizing a surface of the optical material as needed. The hydrophilization is conducted by performing surface treatment with a plasma gas, an ultraviolet ray, corona discharge, an excimer laser, an electron beam or the like, or by performing surface coating with a hydrophilic agent such as 2-hydroxyethyl (meth)acrylate, (meth)acrylic acid, methoxytriethylene glycol (meth)acrylate or dimethylacrylamide, to the optical material which is in the dry state or the moisture state, after the forming process such as the above-described molding method or cutting method.

Thus, without impairing optical transparency required for the optical material and moreover without impairing various physical properties such as oxygen permeability and water content which are based on a compounding composition of various kinds of monomers, the optical material produced according to the present invention has a higher refractive index compared to conventional ones containing no metal oxide nanoparticles, because the predetermined metal oxide nanoparticles are allowed to be dispersed and contained in the polymer which gives the optical material, in a state where the particles are bonded or non-bonded to polymer chains. This allows the optical material to be advantageously used as a transparent optical material having a high refractive index, particularly as a material for the ophthalmic lens such as the intraocular lens or the contact lens.

Then, the ophthalmic lens formed of such an optical material is formed by the extremely advantageous optical material having a high refractive index, as described above, so that the lens thickness can be reduced compared to the conventional one. Accordingly, for example, in the case of the contact lens, oxygen permeability of the contact lens is also improved with a corresponding decrease in its thickness. In the case of the intraocular lens (foldable intraocular lens), the intraocular lens becomes foldable more easily than conventional ones.

Further, the hardness and strength of the optical material is advantageously improved by employing the metal oxide nanoparticles, which are surface-modified with the (meth)acryloyl group- or styryl group-containing silane coupling agents, among the silane coupling agents. Accordingly, even when the compounding ratio of the silicon-containing monomers to all polymerizable components is increased for the purpose of improving oxygen permeability of the optical material (particularly, a hard contact lens), a decrease in the hardness or strength of the polymer can be prevented or inhibited.

### EXAMPLES

To further clarify the present invention, some examples of the invention will be described. It is to be understood that the invention is not limited to the details of the illustrated examples and the foregoing description, but may be embodied with various changes, modifications and improvements, which may occur to those skilled in the art without departing from the scope of the invention.

Initially, zirconium oxide (ZrO₂) having an average particle size of 4 nm, which was confirmed by TEM measurement, was prepared as metal oxide nanoparticles, and surface treatment with an organic acid and surface treatment (1) to (3) with silane coupling agents, as described below, were performed thereto.

### -Organic Acid Treatment-

To a liquid in which 6 g of zirconium oxide was dispersed by ultrasonic wave in 100 g of benzyl alcohol, 6 g of caprylic acid was added, followed by stirring at room temperature for 2 hours. Ethanol was added to this solution to allow a precipitate to be formed, and a supernatant solution was discarded after decantation. This operation using ethanol was repeated three times to wash the precipitate with ethanol, and then, centrifugation (3,000 rpm) was performed to recover a white precipitate. Subsequently, the precipitate containing ethanol was dissolved again in 30 ml of tetrahydrofuran, and the solvent was removed by vacuum distillation to obtain 5 g of caprylic acid-modified zirconium oxide (ZrO₂-CPA). Then, elemental analysis of the resulting ZrO₂-CPA was performed. As a result, the content of zirconium oxide in ZrO₂-CPA was 73% by weight.

### -Surface Treatment with Silane Coupling Agent-

### (1) Introduction of Methacryloyl Group by Triethoxysilane Treatment

Five grams of ZrO₂-CPA subjected to the above-mentioned organic acid treatment was placed in a 100 ml three-neck flask equipped with a condenser tube, and dissolved in 40 ml of tetrahydrofuran while streaming a nitrogen gas. After stirring at room temperature for 30 minutes, 3 g of 3-methacryloxypropyltriethoxysilane (KBE 503 manufactured by Shin-Etsu Chemical Co., Ltd) was added through a syringe, followed by further stirring for 10 minutes. To this transparent solution, 4 g of ethanol was added, and the resulting solution was stirred with heating on an oil bath of 60°C for 3 hours. Thereafter, the temperature was restored to room temperature, followed by further stirring for 3 hours. Then, the solution was transferred to a 300 ml beaker, and a large excess of ethanol was added to allow a white precipitate to be formed. After decantation, a supernatant solution was discarded. Thereafter, the same operation as in the above-mentioned organic acid treatment was performed, and the precipitate was recovered to obtain 4 g of ZrO₂ (ZrO₂-1) surface-treated with 3-methacryloxypropyltriethoxysilane.

### (2) Introduction of Methacryloyl Group by Monoethoxysilane Treatment

Eight grams of ZrO₂-CPA subjected to the above-mentioned organic acid treatment was placed in a 200 ml three-neck flask equipped with a condenser tube, and dissolved in 40 ml of tetrahydrofuran while streaming a nitrogen gas. Then, 10 g of 3-methacryloxypropyldimethylethoxysilane (a custom-made agent manufactured by Shin-Etsu Chemical Co., Ltd) was added through a syringe, followed by stirring at room temperature for 30 minutes. Thereafter, the resulting solution was stirred with heating on an oil bath of 60°C for 3 hours. To this solution, 1.7 g of caprylic acid was further added, followed by further stirring for 3 hours. Thereafter, the flask was removed from the oil bath, followed by stirring at room temperature for 2 days. Then, the resulting solution was transferred to a 500 ml beaker, and a large excess of ethanol was added to allow a white precipitate to be formed. After decantation, a supernatant solution was discarded. Thereafter, the same operation as in the above-mentioned organic acid treatment was performed, and the precipitate was recovered to obtain 8 g of ZrO₂ (ZrO₂-2) surface-treated with 3-methacryloxypropyldimethylethoxysilane.

### (3) Introduction of Styryl Group by Monoethoxysilane Treatment

The operation was performed in the same manner as in the above (2) with the exception that p-styryldimethylethoxysilane (a custom-made agent manufactured by Shin-Etsu Chemical Co., Ltd) was used in place of the above 3-methacryloxypropyldimethylethoxysilane (a custom-made agent manufactured by Shin-Etsu Chemical Co., Ltd), thereby obtaining 8 g of ZrO₂ (ZrO₂-3) surface-treated with p-styryldimethylethoxysilane.

Meanwhile, as monomers, tris(trimethylsiloxy)silylstyrene (SiSt), hexafluoroisopropyl methacrylate (6FPMA), ethylene glycol dimethacrylate (EDMA), vinylbenzyl methacrylate (VBMA), methacrylic acid (MAA) and N-vinyl-2-pyrrolidone (N-VP) were prepared, while 2,2'-azobis(2,4-dimethylvaleronitrile) (ADVN) was prepared as a polymerization initiator.

Then, the various kinds of the monomers were mixed such that they are present at the compounding ratio shown in the following Table 1 or Table 2, and the above-mentioned silane coupling agent-treated zirconium oxide (ZrO₂-1, 2 or 3) was added thereto and dispersed by ultrasonic wave. As a result, zirconium oxide was dispersed uniformly and finely in all monomer compositions of Examples 1 to 6 and Comparative Examples 1 to 3. Then, the polymerization initiator was added to each of the monomer compositions of Examples 1 to 6 and Comparative Examples 1 to 3 in which zirconium oxide was uniformly dispersed. Subsequently, each of the resulting monomer compositions was poured into a glass test tube, and the temperature thereof was increased stepwise at 45°C for 24 hours, 50°C for 24 hours and 65°C for 15 hours to perform polymerization.

Then, an optical material comprising each polymer obtained as described above was cut into a thickness of 1.0 mm, and then, the light transmittance in a visible region (380 to 800 nm) was measured by using a spectrophotometer. As a result, all of the polymers according to Examples 1 to 6 and Comparative Examples 1 to 3 had a visible light transmittance of 80% or more, and it was observed that they had sufficient transparency and that the metal oxide nanoparticles were present in the polymers in a favorable dispersed state. Further, the particle size of the metal oxide nanoparticles dispersed in the polymers was measured by XRD (X-ray diffraction) and a TEM (transmission electron microscope), and it was confirmed that every one of them has the particle size within the range of about 2 to 5 nm.

Further, using the optical materials comprising the polymers according to Examples 1 to 6 and Comparative Examples 1 to 3 obtained above, the following physical properties (oxygen permeability coefficient, Shore D hardness and refractive index) were measured.

### -Oxygen Permeability Coefficient-

The optical material obtained above was processed on a lathe to prepare a circular plate about 10 mm in diameter and about 0.2 mm in thickness. The plate was subjected to a measurement at a temperature of 35°C for 5 minutes by using GTG (GAS to GAS) ANALYZER (manufactured by REHDER DEVELOPMENT COMPANY), and the measured value was converted by using measurements of a contact lens, "Menicon EX", manufactured by Menicon Co., Ltd. (oxygen permeability coefficient: 64), which was standardized in ISO 9912-2, to determine the oxygen permeability coefficient. The results thereof are shown in the following Table 1 and Table 2.

### -Shore D Hardness-

The optical material obtained above was processed on a lathe to prepare a circular plate about 10 mm in diameter and about 3 mm in thickness. The Shore D hardness of such a plate was measured by using a durometer, Type D (manufactured by TECLOCK Corporation) under conditions of a temperature of 25°C and a humidity of 50%. The results obtained are shown in the following Table 1 and Table 2.

### -Refractive Index-

The optical material obtained above was processed on a lathe to prepare a circular plate about 10 mm in diameter and about 1 mm in thickness. The refractive index of such a plate was measured by using an Abbe refractometer, TYPE 2T (manufactured by ATAGO Co., Ltd.) under conditions of a temperature of 20°C and a humidity of 50%. The results obtained are shown in the following Table 1 and Table 2.

**[Table 1]**

| | | Example | | | Comparative Example |
|---|---|---|---|---|---|
| | | 1 | 2 | 3 | 1 |
| Compounding Ratio (wt%) | SiSt | 70 | 70 | 70 | 90 |
| | MAA | 4 | 4 | 4 | 4 |
| | N-VP | 5 | 5 | 5 | 5 |
| | ZrO₂-1 | 20 | - | - | - |
| | ZrO₂-2 | - | 20 | - | - |
| | ZrO₂-3 | - | - | 20 | - |
| | ADVN | 0.2 | 0.2 | 0.2 | 0.2 |
| Oxygen Permeability Coefficient^{*1} | | 242 | 303 | 313 | 302 |
| Shore D Hardness | | 66 | 65 | 65 | 65 |
| Refractive Index | | 1.489 | 1.487 | 1.487 | 1.466 |

| | | | | | |
|---|---|---|---|---|---|
| *1: Unit ×10⁻¹¹ (cm²/sec)·(mLO₂/(mL·mmHg)) | | | | | |

As apparent from the results shown in Table 1, the optical materials according to Example 1 to 3 are more than 0.02 higher in refractive index than the optical material according to Comparative Example 1 in which any one of ZrO₂-1 to 3 is not blended. Further, it is observed that Examples 2 and 3 in which ZrO₂-2 or ZrO₂-3 is used show a higher oxygen permeability coefficient than Comparative Example 1, and it is confirmed that Examples 2 and 3 are also excellent in oxygen permeability.

**[Table 2]**

| | | Example | | | Comparative Example | |
|---|---|---|---|---|---|---|
| | | 4 | 5 | 6 | 2 | 3 |
| Compounding Ratio (wt%) | SiSt | 55 | 55 | 55 | 85 | 40 |
| | 6FPMA | - | - | - | - | 45 |
| | EDMA | 1 | 1 | 1 | 1 | 1 |
| | VBMA | 5 | 5 | 5 | 5 | 5 |
| | MAA | 4 | 4 | 4 | 4 | 4 |
| | N-VP | 5 | 5 | 5 | 5 | 5 |
| | ZrO₂-1 | 30 | - | - | - | - |
| | ZrO₂-2 | - | 30 | - | - | - |
| | ZrO₂-3 | - | - | 30 | - | - |
| | ADVN | 0.2 | 0.2 | 0.2 | 0.2 | 0.2 |
| Oxygen Permeability Coefficient^{*1} | | 175 | 196 | 191 | 261 | 194 |
| Shore D Hardness | | 73 | 71 | 70 | 61 | 74 |
| Refractive Index | | 1.509 | 1.510 | 1.515 | 1.473 | 1.431 |

| | | | | | | |
|---|---|---|---|---|---|---|
| *1: Unit ×10⁻¹¹ (cm²/sec)·(mLO₂/(mL·mmHg)) | | | | | | |

As apparent from the results shown in Table 2, it is confirmed that the optical materials according to Example 4 to 6 are more than 0.02 higher in refractive index than the optical material according to Comparative Example 2 in which none of ZrO₂-1 to 3 is blended, and that Shore D hardness of Example 4 to 6 are higher than that of Comparative Example 2. Further, comparing Comparative Example 3, in which the compounding ratio of the silicon-containing monomer (SiSt) is small and none of ZrO₂-1 to 3 is blended, with Examples 4 to 6, it is found that the optical materials according to Examples 4 to 6 are 0.07 or more higher in refractive index, and moreover, that they are approximately equal in Shore D hardness, although Examples 4 to 6 are larger in the compounding ratio of the silicon-containing monomer (SiSt). Meanwhile, when Comparative Example 2 and Comparative Example 3 are compared to each other, it is found that Shore D hardness of Comparative Example 2, in which the compounding ratio of the silicon-containing monomer (SiSt) is larger, is largely decreased.

## Claims

1. An optical material comprising a polymer obtained by polymerizing a monomer composition comprising at least one polymerizable unsaturated bond-containing monomer in which metal oxide nanoparticles which are surface-modified with silane coupling agents are uniformly dispersed, while maintaining a stable dispersion of the metal oxide nanoparticles.

2. The optical material according to claim 1, wherein (meth)acryloyl groups or styryl groups, which are polymerizable groups, are introduced onto surfaces of the metal oxide nanoparticles by the surface modification.

3. The optical material according to claim 1 or 2, wherein the metal oxide nanoparticles dispersed in the polymer have an average particle size of 25 nm or less.

4. The optical material according to any one of claims 1 to 3, wherein the metal oxide is at least one selected from the group consisting of titanium oxide, zirconium oxide and hafnium oxide.

5. The optical material according to any one of claims 1 to 4, wherein the metal oxide nanoparticles, which are surface-modified with the silane coupling agents, are contained in the monomer composition at a ratio of 0.1 to 80% by weight.

6. The optical material according to any one of claims 1 to 5, wherein the metal oxide nanoparticles, which are surface-modified with the silane coupling agents, act as a crosslinking agent, whereby the polymer is crosslinked through the metal oxide nanoparticles.

7. The optical material according to any one of claims 1 to 6, wherein the monomer contain one of (meth)acryloyl group and styryl group.

8. An ophthalmic lens formed of the optical material according to any one of claims 1 to 7.
